# EUROPEAN PATENT APPLICATION

(11) **EP 2 397 986 A1**
(43) Date of publication of application: **21.12.2011**
(21) Application number: 11170182.7
(22) Date of filing: 16.06.2011
(51) Int. Cl.: G06Q 30/00

(54) **An interactive method and system for ordering one or more goods or services in a public commercial**

(30) Priority: 18.06.2010 IT MI20101113
(71) Applicant: Golden Service S.R.L., 23900 Lecco LC (IT)
(72) Inventor: Palmisani, Domenico, 23900 Lecco LC (IT)
(74) Representative: Ciceri, Fabio

(57) **Abstract**

The present invention relates to a method and an interactive system (1) for ordering one or more goods or services in a public commercial concern. The method comprises the steps of providing a menu comprising a list of goods or services, a set of characteristic data items for each good or service of said menu; providing a set of pictures and/or a set of videos for each good or service of said menu. This method is characterized by the steps of: storing said menu, said data set, said picture set and/or said video set into a memory (2B) of a computer device (2) for them to be read by a microprocessor (2A) of said computer device (2); selecting at least one good or service of said menu; associating said at least one good or service with at least one corresponding video of the video set and at least one corresponding characteristic data item of the characteristic data set and/or at least one corresponding picture from the picture set; generating for each good or service an information flow (2E) comprising a predetermined time combination between said at least one corresponding video and said at least one corresponding characteristic data item and/or said at least one corresponding picture; and displaying on a display screen of said computer device said information flow (2E). The information flow (2E) is further displayed in such a manner that the corresponding video of the video set and the corresponding characteristic data item of the characteristic data set and/or the corresponding picture of the picture set are displayed for an interval of time corresponding to a first (t₁), a second (t₂) and/or a third (t₃) predetermined period of time respectively.

## Description

The present invention relates to a method and interactive system for ordering one or more goods or services in a public commercial concern, particularly but without limitation a method and a system for ordering one or more dishes from a restaurant menu.

As used herein, the term public commercial concern is meant as a place structurally defined by one or more spaces, mostly indoor, which is intended for particular uses, such as catering (coffee bars, supermarkets, restaurants, etc.), sale of goods or services (shops in general, banks, etc.).

As used herein, the term menu is meant as a list of goods or services supplied to a customer in a public commercial concern; for example, the menu may comprise the list of dishes and wines available to the customers or the combination of dishes served in a lunch or the list of items on sale at a shop.

Without prejudice to the general scope of the invention, reference will be made hereinafter to the case in which the public commercial concern is a restaurant and the menu consists in the list of dishes and wines available to customers, and the combination of dishes served in a lunch.

It often happens that a restaurant operator (either the restaurant owner or a waiter) has to describe the organoleptic or nutritional characteristics of one or more dishes in the menu to a customer or show him/her pictures on paper of the dishes he/she has chosen.

Nevertheless, the restaurant operator is not always able to provide the requested details of the selected dish.

This may lead the customer to give a bad opinion about the hospitality offered by the restaurant, e.g. in a criticism published in a Web site that collects reviews of public concerns/restaurants.

Such judgment might discourage any further customers, with obvious and imaginable consequences for the restaurant owner.

Furthermore, the pictures showing the customer-selected dish may have an unacceptable quality, due to the wear of the paper medium on which it is printed, or to poor image quality, inadequate to reveal the external appearance of the dish.

It also happens that the restaurant operator and/or customer do not speak the same language, which makes it problematic, or even impossible to describe or illustrate the characteristics of the dish that the customer is interested in.

Finally, it should be noted that, according to a recent commercial trend, the dishes are often associated to fancy names, i.e. names that are not directly indicative of the ingredients of the dish.

While this commercial trend can enhance the business of the restaurant manager, it still requires the customer to ask which ingredients are used for the dish and how the latter is prepared, thereby making the above difficulties even more problematic.

In view of the above prior art, the object of the present invention is to obviate the above mentioned prior art problems.

According to the present invention, this object is fulfilled by a method for ordering a good or service in a public commercial concern as defined in claim 1.

This object is fulfilled by an interactive system for ordering a good or service in a public commercial concern as defined in claim 6.

Finally, such object is also fulfilled by an IT product to be loaded into the memory of a computer system and allowed to operate in such computer, for carrying out the method as defined in claim 7.

This invention provides a method and an interactive system which allows the customer to make a more conscious choice of the dish and helps the restaurant operator to illustrate the characteristics thereof (i.e. organoleptic, nutritional and/or price information) to the customer.

Furthermore, the present invention allows the customer to be informed of the organoleptic or nutritional characteristics of the chosen dish through a graphical interface of an electronic device that is part of the interactive system, or be shown its external appearance at the end of the preparation through a high-resolution picture or be shown the main steps for preparation, cooking and presentation of the selected dish, through a video lasting from a few seconds to a few minutes.

The characteristics and advantages of the present invention will appear from the following detailed description of one practical embodiment, which is illustrated without limitation in the annexed drawing 1, which shows a diagrammatic view of one embodiment of the interactive system of the present invention.

Referring to the annexed drawing 1, there is shown one embodiment of the interactive system 1 for ordering one or more goods or services in a public commercial concern, such as one or more dishes from a restaurant menu.

The system 1 comprises at least one a computer device 2 having a microprocessor 2A, a memory 2B, a display screen 2C and a data input interface 2D.

The system 1 comprises a network infrastructure 3 adapted to establish a signal communication between the computer device 2 and said at least one peripheral device 4.

It shall be noted that the peripheral devices 4 are remote from the computer device 2.

The network infrastructure 3 is known to the skilled person and will not be further described herein.

For the purposes hereof, the infrastructure 3 comprises a transceiver device 3A which is in signal communication, preferably in RF (i.e. wireless) mode, with a hub 3B on the one hand and with the computer device 2 on the other.

The hub 3B is in turn in signal communication, preferably in wired mode, with the peripheral devices 4.

For instance, the peripheral devices 4 may consist of an order printer, a receipt or invoice printer, an all-in-one computer, a server, etc.

The computer device 2 comprises a signal transmitting device, which is adapted to transmit an information flow 2E generated by the computer device to the network infrastructure 3, in response to handling of the data input interface 2D.

Then, the information flow 2E so generated is transmitted to the peripheral device 4 through the transceiver device 3A of the infrastructure 3.

According to its special setting, the hub 3B recognizes which peripheral device 4 is interested by said flow 2E and forwards the information flow 2E to the peripheral device that is designed to receive it.

For instance, the information flow 2E may be transmitted either to the order printer in the kitchen or the invoice or receipt printer, according to the contents of said flow, as explained below.

The interactive system 1 comprises a set of characteristic dish-specific data items, and a set of pictures and/or videos concerning each dish of the menu.

Such set of characteristic data items, set of pictures and/or videos are preferably stored in the memory 2B of the device 2, which is digitally accessible from the microprocessor 2A of such device 2.

Particularly, the characteristic data set comprises a plurality of characteristic data items for each dish. For instance, for each dish there is a characteristic data item concerning organoleptic qualities, a nutritional property field, a price field, etc.; in a preferred embodiment, the characteristic data set is embodied by alphanumeric (i.e. text) files, of txt or equivalent type.

The picture set comprises a plurality of high-quality pictures (e.g. having a resolution above 768x512 pixels), in which each picture represents the external appearance of a dish in the menu; in a preferred embodiment, the picture set is embodied by graphical files, of jpeg or equivalent type.

Advantageously, the video set comprises a plurality of high-quality (e.g. with a resolution above 1024x768 pixels) videos (i.e. with images and sounds), lasting from a few seconds to a few minutes, preferably ten seconds; each video represents the main steps required for preparation, cooking and presentation of a dish in the menu; in a preferred embodiment, the video set is embodied by graphical files of the avi or equivalent type.

In order to store said sets of data items, pictures and/or videos in a structured and organized manner, it shall be noted that the computer device 2 comprises a database (not shown) which consists of a plurality of object-oriented databases organized in at least one database file, which preferably resides in the memory 2B.

In other words, a database is provided in the device 2, to allow efficient creation and handling of object-oriented databases.

An object-oriented database comprises the set of pictures, each associated with a particular dish of the menu.

A further object-oriented database comprises the set of videos, each illustrating the peculiar steps for preparation, cooking and presentation of each dish of the menu.

Finally, another object-oriented database comprises the set of characteristic data items, each data set being representative of the organoleptic and nutritional information of the dish and the cost of the selected dish.

In a preferred embodiment, the computer device 2 is handheld electronic device having the display screen 2C integrated therein.

For example, particularly suitable devices, in terms of available memory size, display resolution and for their policy of accepting third party program codes (so-called applications) are IphoneR, IpadR and/or ItouchR from Apple Inc.

The interactive system 1 comprises an IT product, which is preferably stored in the memory 2B of the device 2 and is readable by the microprocessor 2a of the computer device 2.

Otherwise, the IT product, as well as the characteristic data set, the picture set and/or the video set and corresponding object-oriented databases may be stored in the mass storage of a peripheral device 4, i.e. the memory of a server.

This IT product allows the customer in a public concern to select and order at least one dish from the menu.

Particularly, the IT product comprises a plurality of instructions which, in response to handling of the data input interface 2D (e.g. a finger touch on the screen 2C by the waiter or possibly the customer, if he/she receives the device 2 from the restaurant operator), is adapted to associate each dish selected by the customer with at least one corresponding video and at least one corresponding picture and/or at least one corresponding characteristic data item.

Advantageously, once the IT product has performed the association, the microprocessor 2A is adapted to generate the information flow 2E in a predetermined order or time sequence, to allow such flow 2E to be displayed on the display screen 2C.

Advantageously, the microprocessor 2A relationally associates at least one video and at least one picture and/or at least one characteristic data item to the selected dish.

Such association is performed by connecting together the various objet-oriented databases to create a consistent and logic representation of pictures, videos and/or characteristic data, i.e. to create the information flow 2E in a predetermined time combination.

In other words, the program code associates each dish with the video (showing the preparation, cooking and presentation of the dish), the picture and/or relevant data concerning organoleptic or nutritional qualities or cost of the dish, in a preset order or time succession of videos, characteristic data and/or pictures.

Particularly, according to the selected dish, the predetermined time combination involves a presentation in a sequence comprising any permutation between the relevant video and the corresponding picture and/or the corresponding characteristic data.

For example, once the dish has been selected from the menu, the IT product creates an information flow whose time sequence follows the scheme below:
- first, the video showing the main steps required for preparation, cooking and presentation of the dish is shown and
- then, preferably at the end of the video, a picture is shown, preferably at the same time as information about organoleptic, nutritional and/or cost information of the selected dish.

Assuming, for instance, that a user selects the dish "fettuccine with wild boar sauce", the waiter can show the video in which the cook prepares, cooks and presents the dish and then, at the end of the video, he/she can show a picture, i.e. a static image of the dish and/or its characteristic data (e.g. caloric intake, weight of pasta, etc.) and/or cost.

This particular permutation affords the advantageous technical effect that, even when the customer diverts his/her attention from the video (possibly because it is too long or not interesting, although required) he/she still can look at the picture image and characteristic data (including price) of the dish he/she has selected.

Alternatively, other permutations may be provided between the corresponding data set and the corresponding picture set. For instance, in an alternative permutation, at the end of the video, the characteristic data item is displayed before the picture, and in still another permutation, the picture is displayed before the characteristic data item.

Once the customer has selected the dish, the information flow 2E is transmitted from the device 2 to the appropriate peripheral device 4 through the infrastructure 3.

In one embodiment, the information flow 2E is displayed in such a manner that at least one corresponding video of the video set and at least one corresponding characteristic data item of the characteristic data set and/or at least one corresponding picture of the picture set are displayed for an interval of time corresponding to a first t₁, a second t₂ and/or a third t₃ predetermined period of time respectively, according to the selected dish.

Particularly, the permutations may be programmed so that the information flow 2E associated with a selected dish will successively include display of the video for a time t₁ of 30 seconds, display of a photographic picture for a period t₂ of 5 seconds and characteristic data for a period t₃ of 10 seconds.

In one version, the period of time t₁ during which the relevant video of the video set is displayed may range from 10 seconds to 300 seconds.

Likewise, the period of time t₂ during which the relevant picture of the picture set is displayed may range from 5 seconds to 20 seconds.

Finally, the period of time t₃ during which the characteristic data item of the characteristic data set is displayed may range from 5 seconds to 20 seconds.

Advantageously, these permutations are managed by the microprocessor 2A of the device 2, so that the information flow 2E may be displayed to a user without requiring any action by the waiter on the device to select each time the relevant video from the video set, the relevant characteristic data item from the characteristic data set and/or the relevant picture from the picture set.

This provides an actually automatic procedure for displaying the information flow 2E, which affords considerable advantages in terms of practical and convenient use of the computer device 2.

Advantageously, concerning the above, the associations of at least one video, at least one picture and/or at least one characteristic data item may be performed in a predetermined time combination, whereby the device may display, for instance, firstly a video, secondly a picture and thirdly a characteristic data item, or firstly a picture, secondly a characteristic data item and thirdly a video, or firstly a characteristic data item, secondly a picture and thirdly a video, and so on, according to the particular selected dish.

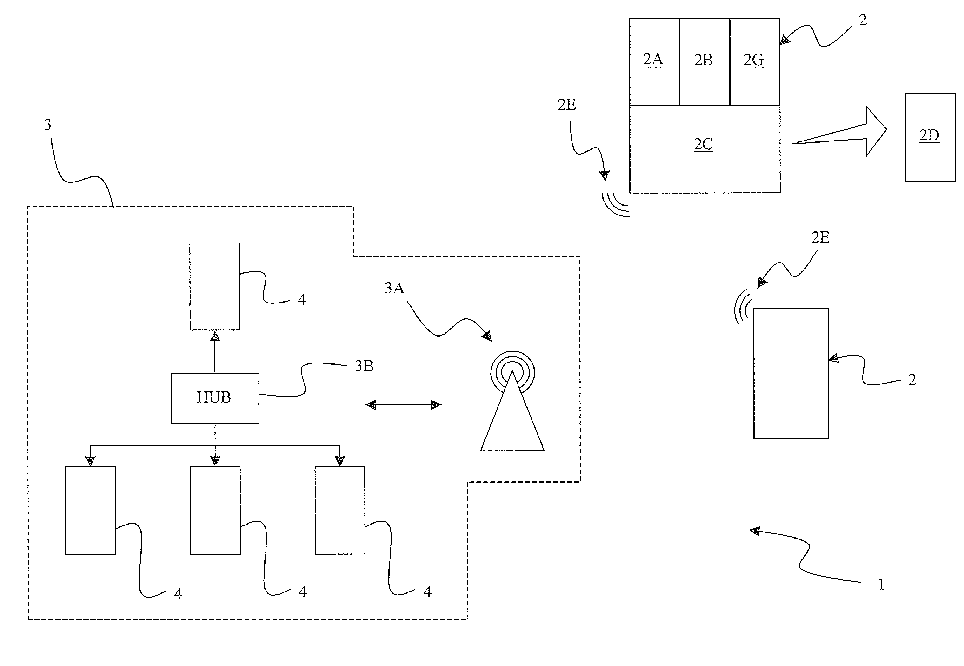

Referring to the example of Figure 1, the computer device 2 comprises a dish complexity storage device 2G, which contains a plurality of complexity indices α indicative of the preparation complexity of the selected good or service. In one version, the complexity index α is a numerical value selected from one to ten, in which the value one represents a low complexity index α and the value ten represents a very high complexity index α.

It shall be noted that the complexity index of the dish is predetermined based on tests carried out by the applicant. For example, the dish "fettuccine with wild boar sauce" may be assigned a higher complexity index (e.g. 8) than the dish "spaghetti alla carbonara" (e.g. 3).

For this purpose, the microprocessor 2A is adapted to associate each information flow 2E concerning a given dish with a corresponding complexity index α indicative of the complexity of preparation of such dish.

Therefore, the information flows 2E to be displayed may be combined in different time combinations based on the complexity degree of the selected dishes. Advantageously, the microprocessor 2A uses the complexity index α to change the duration t₁ of the video. Particularly, the complexity index α is used by the microprocessor 2A as a factor that contracts or reduces the duration t₁ of the video.

Indeed, since in a preferred embodiment, the videos showing the preparation, cooking and presentation of the dishes, which are stored in the database of the device 2, have a constant duration, i.e. all the videos have a duration t₁, for example, of 40 seconds, then the duration t₁ of the video may be contracted or reduced by a value that is inversely proportional to the value of the complexity index α.

Therefore, the higher the complexity index α the lower the contraction or reduction value to be applied to the duration of the video, which will be at the most equal to the overall duration t₁ of the video as stored, whereas the lower the complexity index α the higher the contraction or reduction factor to be applied to the duration t₁ of the video.

In other words, for dishes having a high index α (i.e. typical or regional dishes), the microprocessor 2A displays the information flow 2E so that the video is assigned a longer duration t₁ as compared with the video required to show the preparation, cooking and presentation of a simple dish, whereas the picture and/or organoleptic information and/or costs are displayed for a substantially identical duration for both dishes.

By this arrangement, the customer will not be bored by long videos for simple dishes, while providing the customer with sufficient information for a conscious dish selection.

The duration t₁ of the video may be contracted, for instance, by removing one or more frames of the original video.

It shall be noted that the IT product for generating the information flow 2E is preferably part of an IT management system for managing the restaurant business.

Particularly, the IT management system selects the peripheral device 4 that is designed to receive such flow 2E; for instance, if the information flow 2E only includes the price, then the receipt printer and the order printer are selected; if the flow 2E includes the picture and/or video and also the price, than the selected peripheral devices 4 are the order printer, the receipt printer and the all-in-one computer.

Advantageously, the characteristic dish-specific information may be displayed in various languages.

In a preferred embodiment of the present invention, the display screen 2C defines a display area that, when the picture, videos and/ characteristic data are displayed in such area, the data only includes a portion of the display area. Particularly, the covered area is from 25 to 75% the whole display area.

Therefore a sufficient area will be designed, for instance, for service information useful for the restaurant manager (e.g. the table number, the number of diners, etc.).

Those skilled in the art will obviously appreciate that a number of changes and variants may be made to the arrangements as described hereinbefore to meet specific needs, without departure from the scope of the invention, as defined in the following claims.

## Claims

1. An interactive method for ordering one or more goods or services in a public commercial concern, comprising the steps of:
- providing a menu comprising a list of goods or services, a set of characteristic data items for each of the goods or services of said menu;
- providing a set of pictures and/or a set of videos for each of the goods or services of said menu;
- storing said menu, said set of data items, said set of pictures and/or said set of videos in a memory (2B) of a computer device (2), for a microprocessor (2A) of said computer device (2) to read them;
- selecting at least one of the goods or services of said menu;
- associating said at least one of the goods or services with a corresponding video of the set of videos and at least one corresponding characteristic data item of the set of characteristic data and/or at least one corresponding picture of the set of pictures;
said method **being characterized by the steps of:**
- generating an information flow (2E) for each of the selected goods or services, which flow comprises a predetermined time combination between said at least one corresponding video and said at least one corresponding characteristic data item and/or said at least one corresponding picture;
- displaying said information flow (2E) on a display screen of said computer device (2), said information flow (2E) being displayed so that
- said at least one corresponding video of the set of videos and at least one corresponding characteristic data item of the set of characteristic data and/or at least one corresponding picture of the set of pictures being displayed for an interval of time corresponding to a first (t₁), a second (t₂) and/or a third (t₃) predetermined period of time respectively, according to the degree of complexity of said at least one selected good or service.

2. A method as claimed in claim 1, including the steps of:
- storing a plurality of complexity indices (α), each of which is indicative of the preparation complexity of said selected good or service,
- associating said information flow (2E) with a respective complexity index value (α), and
- changing said first predetermined period of time (t₁) according to the value of said corresponding complexity index (α) indicative of the complexity of said selected good or service.

3. A method as claimed in claim 2, wherein said step of changing consists in contracting said first predetermined period of time (t₁) by a contraction value that is inversely proportional to the value of said complexity index (α).

4. A method as claimed in claim 1, wherein said predetermined time combination of the information flow (2E) includes first the display of said at least one corresponding video, and then the display of said at least one corresponding picture and, at the same time, said at least one characteristic data item on said display screen (2C).

5. A method as claimed in claim 1 or 2, comprising the additional step of transmitting said information flow (2E) to a peripheral device (4), said peripheral device (4), being located remote from said computer device (2).

6. An IT product designed to be directly loaded into the memory of a computer device (2), comprising program code portions, and adapted to carry out the method as claimed in any one of claims 1 to 5, when it runs on said computer device (2).

7. An interactive system (1) for ordering one or more goods or services in a public commercial concern, comprising:
- a computer device (2) having a microprocessor (2A), a memory (2B), a display screen (2C) and a data input interface (2D);
- a set of characteristic data items, a set of pictures and/or a set of videos, for each good or service in said menu, said set of characteristic data items, said set of pictures and said set of videos being stored in said memory (2B) and being digitally accessible from the microprocessor (2A) of said computer device (2),
- an IT product stored in said memory (2B) and digitally accessible from the microprocessor (2A) of said computer device (2), said IT product allowing a customer to select and order at least one of the goods or services from said menu and comprising a program code that, in response to an action on said data input interface (2D) of said computer device (2), is adapted to associate each of the selected goods or services with at least one video and at least one corresponding picture and/or at least one characteristic data item of the corresponding sets of videos, pictures and characteristic data items and to create an information flow (2E) having a predetermined time combination between the corresponding video and the corresponding characteristic data unit and/or the corresponding picture,
**characterized in that** said display screen (2C) displays said information flow (2E) so that said at least one corresponding video of the set of videos and at least one corresponding characteristic data item of the set of characteristic data items and/or at least one corresponding picture of the set of pictures being displayed for an interval of time corresponding to a first (t₁), a second (t₂) and/or a third (t₃) predetermined period of time respectively, according to the degree of complexity of said at least one selected good or service.

8. An interactive system (1) as claimed in claim 7, wherein said computer device (2) comprises a dish complexity storage device (2G) which is adapted to contain a plurality of coefficient indices (α) indicative of the preparation complexity of said selected good or service, said microprocessor (2A) being adapted to associate said information flow (2E) with a corresponding index (α) to change said first predetermined period of time (t₁) according to the value of said corresponding complexity index (α).

9. An interactive system as claimed in claim 7, comprising at least one peripheral device (4) and wherein said computer device (2) includes a signal transmitting device which is adapted to transmit said information flow (2E) to said at least one peripheral device (4), said interactive system comprising a network infrastructure (3) adapted to establish a signal communication between the computer device (2) and said at least one peripheral device (4).

10. An interactive system as claimed in claim 7, wherein said computer device (2) comprises a database having a plurality of object-oriented databases organized in at least one database file.

11. An interactive system as claimed in any of the preceding claims from 7 to 10, wherein said computer device (2) is an electronic device that can be held in the palm of one hand and has said display screen (2C) integrated therein, said signal transmitting device is a wireless transmitting device, said display screen defining a display area and said one or more pictures and/or videos and/or one or more characteristic data items covering portion of surface from 25% to 75% of the surface of said display area, when they are displayed on said display screen.
